# EUROPÄISCHE PATENTSCHRIFT

(11) **EP 1 598 179 B1**
(45) Veröffentlichungstag und Bekanntmachung des Hinweises auf die Patenterteilung: **23.03.2011**
(21) Anmeldenummer: 04019474.8
(22) Anmeldetag: 17.08.2004
(51) Int. Cl.: B32B 27/32, F16L 9/12

(54) **Formstück aus Kunststoff zum Herstellen von Rohrleitungen**
Molded plastic article for manufacturing tubes
Article moulé en matière plastique pour la fabrication de tuyauteries

(30) Priorität: 18.05.2004 DE 102004025055; 21.07.2004 DE 102004035407
(43) Veröffentlichungstag der Anmeldung: 23.11.2005
(73) Patentinhaber: Bänninger Kunststoff-Produkte GmbH, 35447 Reiskirchen (DE)
(72) Erfinder: Stamm, Hans Ulrich, 35633 Lahnau-Waldgirmes (DE); Schmidt, Herbert, 35239 Steffenberg (DE)
(74) Vertreter: von den Steinen, Axel

(56) Entgegenhaltungen:
- WO-A-93/09948
- WO-A-03/094832
- DE-A1- 10 018 324
- US-A1- 2003 054 161

## Beschreibung

Die Erfindung betrifft ein Formstück aus Kunststoff zum Herstellen von Rohrleitungen nach dem Oberbegriff des Anspruchs 1.

Derartige Formstücke können in der Art eines extrudierten, spritzgegossenen oder blasgeformten Rohrs, Fittings oder sonstigen Formstückes ausgebildet sein und dienen zum Erstellen von Rohrleitungen für flüssige, pastöse oder gasförmige Medien. Der Einsatz von Rohren aus Metall, insbesondere aus Kupfer, verzinktem Stahl oder Edelstahl wird durch bestimmte Randbedingungen, wie beispielsweise dem PH-Wert des aufgenommenen Mediums, der Strömungsgeschwindigkeit und der Betriebstemperatur beschränkt. Aus diesem Grund werden vielfach Kunststoffrohre in verschiedenen Einsatzgebieten, wie der Trinkwasserversorgung, der Heizungstechnik, der Lebensmittelindustrie, dem Apparatebau sowie der chemischen Industrie verwendet.

Ein derartiges Kunststoffrohr ist beispielsweise in der DE 100 18 324 C2 beschrieben. Bei diesem Kunststoffrohr ist eine Innenschicht vorgesehen, die mit speziellen Additiven zum Schutz der Polymerketten des Kunststoffes ausgerüstet ist. Durch die Additive werden die Polymerketten insbesondere vor dem Einfluss aggressiver Medien geschützt. In einer als Barriereschicht dienenden Zwischenschicht sind bei diesem Rohr Glasfasern, Glaskugeln und Glasmehl als Füllstoffe eingearbeitet, um die Migration der Additive aus der Innenschicht heraus zu verringern beziehungsweise ganz zu vermeiden.

Aus der WO 031094832 A geht ein Verfahren zur Herstellung von Polypropylen mit einem erhöhten Anteil an β-kristallinen Polypropylen hervor. In diesem Zusammenhang wird auf die Nutzung dieses Kunststoffs insbesondere für die Herstellung von Rohren, Schläuchen, Fasern und anderen Extrusionen hingewiesen.

Nachteilig an diesem Kunststoffrohr ist es, dass das zur Herstellung der Barriereschicht verwendete Polypropylen-Random-Copolymerisat aufgrund seiner Molekularstruktur der Migration nur relativ wenig Widerstand entgegensetzt, so dass die Sperrwirkung letztendlich allein von den Füllstoffen erzielt werden muss.

Ausgehend von diesem Stand der Technik ist es deshalb Aufgabe der vorliegenden Erfindung ein neues Formstück aus Kunststoff zum Herstellen von Rohrleitungen vorzuschlagen, das die Nachteile des Stands der Technik vermeidet.

Diese Aufgabe wird durch ein Formstück nach der Lehre des Anspruchs 1 gelöst.

Vorteilhafte Ausführungsformen der Erfindung sind Gegenstand der Unteransprüche.

Umfangreiche Werkstoffversuche und Strukturanalysen haben gezeigt, dass die Barrierewirkung zur Vermeidung der Migration der Additive aus der Innenschicht heraus auch durch eine geeignete Polymerstruktur erzielt werden kann. Erfindungsgemäß ist deshalb die Barriereschicht aus einem kristallinen, insbesondere nukleiertem, Polymer aufgebaut. Durch das dadurch erreichte sehr feine Kristallgefüge kann eine sehr gute Barrierewirkung zur Vermeidung der Additivmigration aus der Innenschicht erreicht werden.

Aus welchem Polymer die Barriereschicht hergestellt ist, ist grundsätzlich beliebig. Als besonders geeigneter Werkstoff hat sich Polypropylen erwiesen, das im Bereich der Polymerrohrherstellung bereits weite Verbreitung gefunden hat. Insbesondere Polypropylen-Homopolymer (PP-H) ist hervorragend geeignet, eine Barriereschicht zu bilden.

Grundsätzlich sind die vorgenannten Vorteile bereits bei einem in der sogenannten α-Form kristallisierten Polypropylen mit monoklinischer Kristallstruktur feststellbar. Besonders gute Barriereeigenschaften ergeben sich jedoch bei Polypropylen mit hexagonaler Kristallstruktur (β-Form kristallisiertes Polypropylen). Insbesondere Mischkristalle aus (α-Polypropylen und β-Polypropylen sind sehr gut geeignet eine Barriereschicht zu bilden. Insbesondere die Mischform weist dabei neben der gewünschten Barrierewirkung gegen Additivmigration eine besonders hohe Kaltschlagzähigkeit auf. Die Barriereeigenschaften beruhen insbesondere auf der Beta-Kristallstruktur, durch die sich eine höhere Kristallinität des Polypropylens ergibt.

Zur Steigerung der Sperrwirkung kann die Barriereschicht Füllstoffe, insbesondere Glasfasern, Glaskugeln oder Glasmehl, und/oder Additive enthalten. Durch die Kombination der kristallinen Molekularstruktur des verwendeten Polymers und dem Füllen des Polymers mit geeigneten Füllstoffen wird ein Maximierung der Sperrwirkung erzielt. Durch die Füllstoffe kann das Formstück zudem mechanisch stabilisiert werden und der Wärmeausdehnungskoeffizient auf ein geringen Wert eingestellt werden.

Aus welchem Polymer die Innenschicht hergestellt ist, ist grundsätzlich beliebig. Vorzugsweise sollte die Innenschicht jedoch aus dem gleichen Polymer wie die Barriereschicht hergestellt sein, beispielsweise aus Polypropylen, um Materialunverträglichkeiten zwischen den verschiedenen Polymeren auszuschließen.

Der Mehrschichtaufbau des Formstückes ist grundsätzlich beliebig. Nach einer ersten Ausführungsform weist das Formstück lediglich einen zweischichtigen Aufbau aus Innenschicht und Barriereschicht auf, wobei dabei die Barriereschicht zugleich als Außenschicht des Formstücks dient.

Alternativ dazu kann auch ein dreischichtiger Aufbau vorgesehen sein, wobei die Barriereschicht zwischen der Innenschicht und einer zusätzlich vorgesehenen Außenschicht, die die Barrierenschicht allseitig umfasst, angeordnet ist.

Zur Erhöhung der Sperrwirkung kann neben der ersten Barriereschicht aus kristallinem Polymer zusätzlich eine zweite Barriereschicht vorgesehen sein. In dieser zweiten Barriereschicht können dann beispielsweise zusätzlich Füllstoffe eingearbeitet werden.

Eine Ausführungsform eines erfindungsgemäßen Formstückes ist in der Zeichnung schematisch dargestellt und wird nachfolgend beispielhaft erläutert.

Es zeigt:

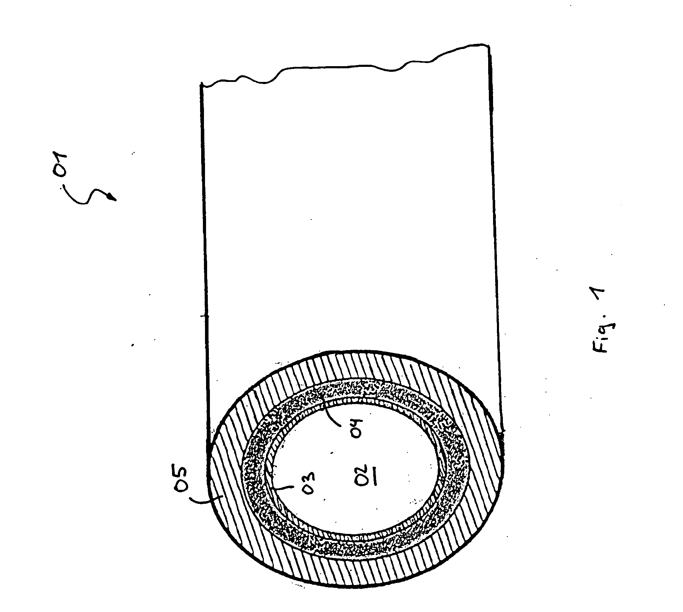

- **Fig. 1**:: Ein Formstück zur Herstellung einer Rohrleitung im Querschnitt.

Das in **Fig. 1** im Querschnitt dargestellte Formstück 01 dient zur Herstellung einer Rohleitung, in deren Innenraum 02 aggressive Medien gefördert werden können. Das Formstück weist einen dreischichtigen Aufbau mit einer Innenschicht 03, einer Barriereschicht 04 und einer Außenschicht 05 auf.

Die Innenschicht 03 besteht aus Polypropylen, beispielsweise einem Polypropylen-Homopolymer. Das Polypropylen der Innenschicht 03 ist mit Additiven ausgerüstet, die die Polymerketten des Polypropylens an der Kontaktfläche zum Innenraum 02 vor den schädigenden Einflüssen der darin geförderten Medien schützt.

Die Barriereschicht 04 besteht ebenfalls aus Polypropylen, wobei das Polypropylen in der Barriereschicht 04 teilweise eine monoklinische Kristallstruktur (Alpha-Form kristallisiertes Polypropylen) und teilweise einer hexagonale Kristallstruktur auf (Beta-Form kristallisiertes Polypropylen) aufweist.

Außerdem ist das Polypropylen in der Barriereschicht 04 mit einem Gemisch aus Glasfasern, Glaskugeln und Glasmehl gefüllt. Durch die spezielle Kristallstruktur des Polypropylens in der Barriereschicht und die gleichzeitige Füllung mit mineralischen Füllstoffen wird die gewünschte Sperrwirkung zur Vermeidung der Migration der Additive aus dem Polypropylen in der Innenschicht 03 maximiert. Außerdem wird eine sehr hohe Kälteschlagzähigkeit erreicht.

Die Außenschicht 05 ist ebenfalls aus Polypropylen hergestellt.

### Bezugszeichenliste

- 01: Formstück
- 02: Innenraum
- 03: Innenschicht
- 04: Barriereschicht
- 05: Außenschicht

## Patentansprüche

1. Formstück (01) aus Kunststoff zum Herstellen von Rohrleitungen mit einem im Querschnitt mehrschichtigen Aufbau, wobei das Formstück (01) zumindest eine Innenschicht (03) und zumindest eine Barriereschicht (04) aufweist, und wobei die Innenschicht (03) mit dem in der Rohrleitung geführten Medium in Kontakt kommt und Additive zum Schutz der Polymerketten gegen aggressive Medien enthält, und wobei die Barriereschicht (04) die Innenschicht (03) allseitig umfasst und die Migration der Additive aus der Innenschicht (03) vermindert, **dadurch gekennzeichnet,**
**dass** die Barriereschicht (04) aus einem kristallinem, nukleiertem Polymer besteht.

2. Formstück nach Anspruch 1,
**dadurch gekennzeichnet,**
**dass** die Barriereschicht (04) aus kristallinem, nukleiertem, Polypropylen besteht.

3. Formstück nach Anspruch 2,
**dadurch gekennzeichnet,**
**dass** die Barriereschicht (04) aus Polypropylen-Homopolymer (PP-H) besteht.

4. Formstück nach einem der Ansprüche 1 bis 3,
**dadurch gekennzeichnet,**
**dass** das Polypropylen der Barriereschicht (04) zumindest teilweise eine monoklinische Kristallstruktur (α-Form kristallisiertes Polypropylen) aufweist.

5. Formstück nach einem der Ansprüche 1 bis 3,
**dadurch gekennzeichnet,**
**dass** das Polypropylen der Barriereschicht (04), insbesondere das Polypropylen-Homopolymer, zumindest teilweise eine hexagonale Kristallstruktur (β-Form kristallisiertes Polypropylen) aufweist.

6. Formstück nach Anspruch 4 und 5,
**dadurch gekennzeichnet,**
**dass** das Polypropylen der Barriereschicht (04) in Teilbereichen eine monoklinische Kristallstruktur (α-Form) und in Teilbereichen eine hexagonale Kristallstruktur (β-Form) aufweist.

7. Formstück nach einem der Ansprüche 1 bis 6,
**dadurch gekennzeichnet,**
**dass** die Barriereschicht (04) Füllstoffe, insbesondere Glasfasern, Glaskugeln und/oder Glasmehl, und/oder Additive enthält.

8. Formstück nach einem der Ansprüche 1 bis 7,
**dadurch gekennzeichnet,**
**dass** die Innenschicht (03) aus dem gleichen Polymer wie die Barriereschicht (04) hergestellt ist.

9. Formstück nach Anspruch 8,
**dadurch gekennzeichnet,**
**dass** die Innenschicht (03) aus Polypropylen hergestellt ist.

10. Formstück nach einem der Ansprüche 1 bis 9,
**dadurch gekennzeichnet,**
**dass** das Formstück einen zweischichtigen Aufbau aufweist, wobei die Barriereschicht zugleich Außenschicht des Formstücks ist.

11. Formstück nach einem der Ansprüche 1 bis 10,
**dadurch gekennzeichnet,**
**dass** das Formstück (01) einen dreischichtigen Aufbau aufweist, wobei die Barriereschicht (04) von einer Außenschicht (05) allseitig umfasst ist.

12. Formstück nach Anspruch 11,
**dadurch gekennzeichnet,**
**dass** die Außenschicht (05) aus dem gleichen Polymer wie die Barriereschicht (04) hergestellt ist.

13. Formstück nach Anspruch 12,
**dadurch gekennzeichnet,**
**dass** die Außenschicht (05) aus Polypropylen hergestellt ist.

14. Formstück nach einem der Ansprüche 1 bis 13,
**dadurch gekennzeichnet,**
**dass** das Formstück (01) neben der ersten Barriereschicht aus einem kristallinem und/oder nukleiertem Polymer zumindest eine zweite Barriereschicht zur Verminderung Migration der Additive aus der Innenschicht aufweist.

15. Formstück nach einem der Ansprüche 1 bis 14,
**dadurch gekennzeichnet,**
**dass** die Innenschicht Metalldesaktivatoren und/oder Chlorakzeptoren und/oder Säureakzeptoren und/oder Radikalfänger und/oder UV-Stabilisatoren und/oder Verarbeitungsstabilisatoren und/oder Langzeitstabilisatoren als Additive enthält.

## Claims

1. A moulded part (01) made from plastic for producing pipelines with a multi-layered structure in cross-section, wherein the moulded part (01) displays at least one inner layer (03) and at least one barrier layer (04) and wherein the inner layer (03) comes into contact with the medium conveyed by the pipeline and contains additives to protect the polymer chains from aggressive media and wherein the barrier layer (04) encloses the inner layer (03) on all sides and reduces the migration of additives from the inner layer (03),
**characterised in that**
the barrier layer (04) is made from a crystalline, nucleated polymer.

2. The moulded part according to claim 1,
**characterised in that**
the barrier layer (04) is made from crystalline, nucleated polypropylene.

3. The moulded part according to claim 2,
**characterised in that**
the barrier layer (04) is made from polypropylene homopolymers (PP-H).

4. The moulded part according to one of the claims 1 to 3,
**characterised in that**
the propylene of the barrier layer (04) displays at least in parts a monoclinic crystal structure (α-form crystallised polypropylene).

5. The moulded part according to one of the claims 1 to 3,
**characterised in that**
the polypropylene of the barrier layer (04), particularly the polypropylene-homopolymer, displays at least in part a hexagonal crystal structure (β-form crystallised polypropylene).

6. The moulded part according to claim 4 and 5,
**characterised in that**
the polypropylene of the barrier layer (04) displays a monoclinic crystal structure (α-form) in partial areas and a hexagonal crystal structure (β-form) in partial areas.

7. The moulded part according to one of the claims 1 to 6,
**characterised in that**
the barrier layer (04) contains fillers, particularly glass fibres, glass beads and/or glass powder, and/or additives.

8. The moulded part according to one of the claims 1 to 7,
**characterised in that**
the inner layer (03) is made from the same polymer as the barrier layer (04).

9. The moulded part according to claim 8,
**characterised in that**
the inner layer (03) is made from polypropylene.

10. The moulded part according to one of the claims 1 to 9,
**characterised in that**
the moulded part displays a two-layered structure, wherein the barrier layer is at the same time the outer layer of the moulded part.

11. The moulded part according to one of the claims 1 to 10,
**characterised in that**
the moulded part (01) displays a three-layered structure, wherein the barrier layer (04) is enclosed on all sides by an outer layer (05).

12. The moulded part according to claim 11,
**characterised in that**
the outer layer (05) is made from the same polymer as the barrier layer (04).

13. The moulded part according to claim 12,
**characterised in that**
the outer layer (05) is made from polypropylene.

14. The moulded part according to one of the claims 1 to 13,
**characterised in that**
the moulded part (01) displays at least a second barrier layer in addition to the first barrier layer made from a crystalline and/or nucleated polymer to reduce migration of the additives from the inner layer.

15. The moulded part according to one of the claims 1 to 14,
**characterised in that**
the inner layer contains metal deactivators and/or chlorine acceptors and/or acid acceptors and/or radical interceptors and/or UV stabilisers and/or processing stabilisers and/or long-term stabilisers as additives.

## Revendications

1. Pièce moulée (01) en matière plastique, destinée à la fabrication de tuyaux ayant une structure multicouche en coupe transversale, la pièce moulée (01) présentant au moins une couche intérieure (03) et au moins une couche barrière (04), et la couche intérieure (03) entrant en contact avec le milieu s'écoulant au sein dudit tuyau et contenant des additifs destinés à protéger les chaînes polymères contre des milieux agressifs, et la couche barrière (04) enveloppant la couche intérieure (03) sur l'intégralité de sa circonférence et réduisant ainsi la migration des additifs depuis la couche intérieure (03),
**caractérisée en ce que**
la couche barrière (04) est constituée d'un polymère cristallin nucléé.

2. Pièce moulée selon la revendication 1,
**caractérisée en ce que**
la couche barrière (04) est constituée de polypropylène cristallin nucléé.

3. Pièce moulée selon la revendication 2,
**caractérisée en ce que**
la couche barrière (04) est constituée de polypropylène-homopolymère (PP-H).

4. Pièce moulée selon l'une des revendications 1 à 3,
**caractérisée en ce que**
ledit polypropylène de la couche barrière (04) présente, au moins partiellement, une structure cristalline monoclinique (polypropylène cristallisé sous sa forme a).

5. Pièce moulée selon l'une des revendications 1 à 3,
**caractérisée en ce que**
ledit polypropylène de la couche barrière (04), notamment le polypropylène-homopolymère, présente au moins partiellement une structure cristalline hexagonale (polypropylène cristallisé sous sa forme p)

6. Pièce moulée selon les revendications 4 et 5,
**caractérisée en ce que**
ledit polypropylène de la couche barrière (04) présentant dans une partie des zones une structure cristalline monoclinique (forme a) et dans une partie des zones une structure cristalline hexagonale (forme β).

7. Pièce moulée selon l'une des revendications 1 à 6,
**caractérisée en ce que**
la couche barrière (04) contient des charges, notamment des fibres de verre, des billes en verre et/ou de la poudre de verre et/ou des additifs.

8. Pièce moulée selon l'une des revendications 1 à 7,
**caractérisée en ce que**
la couche intérieure (03) est fabriquée à partir du même polymère que la couche barrière (04).

9. Pièce moulée selon la revendication 8,
**caractérisée en ce que**
la couche intérieure (03) est fabriquée à partir de polypropylène.

10. Pièce moulée selon l'une des revendications 1 à 9,
**caractérisée en ce que**
ladite pièce moulée présente une structure à deux couches, ladite couche barrière étant en même temps la couche extérieure de ladite pièce moulée.

11. Pièce moulée selon l'une des revendications 1 à 10,
**caractérisée en ce que**
la pièce moulée (01) présente une structure à trois couches, la couche barrière (04) étant enveloppée sur l'intégralité de sa circonférence par une couche extérieure (05).

12. Pièce moulée selon la revendication 11,
**caractérisée en ce que**
la couche extérieure (05) est fabriquée à partir du même polymère que la couche barrière (04).

13. Pièce moulée selon la revendication 12,
**caractérisée en ce que**
la couche extérieure (05) est fabriquée à partir de polypropylène.

14. Pièce moulée selon l'une des revendications 1 à 13,
**caractérisée en ce que**
la pièce moulée (01) présente, outre la première couche barrière en polymère cristallin et/ou nucléé, au moins une deuxième couche barrière destinée à réduire la migration des additifs depuis ladite couche intérieure.

15. Pièce moulée selon l'une des revendications 1 à 14,
**caractérisée en ce que**
ladite couche intérieure contient, en tant qu'additifs, des désactivateurs de métaux et/ou des accepteurs de chlore et/ou des accepteurs d'acides et/ou des piégeurs de radicaux et/ou des stabilisateurs UV et/ou des stabilisateurs agissant pendant la transformation et/ou des stabilisateurs de longue durée.
